# EUROPEAN PATENT SPECIFICATION

(11) **EP 3 798 168 B1**
(45) Date of publication and mention of the grant of the patent: **07.09.2022**
(21) Application number: 20197114.0
(22) Date of filing: 21.09.2020
(51) Int. Cl.: B65H 67/06

(54) **CUTTING DEVICE, BOBBIN CONVEYING DEVICE, BOBBIN SUPPLYING DEVICE AND METHOD FOR CUTTING YARN**
SCHNEIDVORRICHTUNG, SPULENFÖRDERVORRICHTUNG, SPULENZUFÜHRVORRICHTUNG UND VERFAHREN ZUM SCHNEIDEN VON GARN
DISPOSITIF DE DÉCOUPE, DISPOSITIF DE TRANSPORT DE BOBINE, DISPOSITIF DE FOURNITURE DE BOBINE ET PROCÉDÉ DE DÉCOUPE DE FILS

(30) Priority: 30.09.2019 JP 2019179374
(43) Date of publication of application: 31.03.2021
(73) Proprietor: Murata Machinery, Ltd., Kyoto-shi, Kyoto 601-8326 (JP)
(72) Inventor: INOUE, Kei, Kyoto, 612-8686 (JP)
(74) Representative: Jordan, Volker Otto Wilhelm

(56) References cited:
- EP-A1- 0 272 757
- EP-A1- 3 461 774
- JP-A- 2012 184 074
- US-A- 4 506 572
- US-A- 4 596 173

## Description

### BACKGROUND OF THE INVENTION

### 1. Field of the Invention

The present invention relates to a configuration for cutting of an unwound yarn that is drawn out from a yarn supplying bobbin when a yarn supplying bobbin wound with a yarn is conveyed.

### 2. Description of the Related Art

Conventionally, a bobbin supplying device for supplying a bobbin wound with a yarn has been known. Japanese Unexamined Patent Publication No. 2012-184074 discloses a feed yarn bobbin supply device.

The feed yarn bobbin supply device disclosed in Japanese Unexamined Patent Publication No. 2012-184074 is capable of individualizing a large number of inputted feed yarn bobbins. This feed yarn bobbin supply device includes a feed yarn bobbin input part and an individualizing part. The feed yarn bobbin input part includes a staying part, a guiding part, and a fixed quantity carrying part. The staying part makes a large number of inputted feed yarn bobbins temporarily stay.

The guiding part guides the feed yarn bobbin up to the individualizing part that is for individualizing a plurality of feed yarn bobbins. The fixed quantity carrying part is arranged between the staying part and the guiding part. The fixed quantity carrying part has a rocking member. The rocking member sends out only a predetermined quantity of the feed yarn bobbins staying in the staying part by rocking to the guiding part. The rocking member has, on its upper surface, a conveyance plate on which the feed yarn bobbin is placed. At one end portion of the conveyance plate, there is provided a cutter that is for cutting of a yarn unwound from the feed yarn bobbin.

In the feed yarn bobbin supply device disclosed in Japanese Unexamined Patent Publication No. 2012-184074, the yarn may be unwound from the feed yarn bobbin in the staying part, and the unwound yarn may be drawn out from the feed yarn bobbin. When the unwound yarns of a plurality of feed yarn bobbins are entangled with each other, the feed yarn bobbins may be gathered and lumped. In the configuration of Japanese Unexamined Patent Publication No. 2012-184074, when a large number of feed yarn bobbins are gathered in excess of a predetermined amount defined by a size of the conveyance plate, and the entanglement of the unwound yarn is strong, it has become quite difficult for the lumped bobbins to be placed on the rocking member, and smooth conveyance has not been possible.

The lumped feed yarn bobbins can be separated by cutting the unwound yarn. However, in Japanese Unexamined Patent Publication No. 2012-184074, since the cutter is arranged on the opposite side of the staying part with the rocking member interposed in between, it has been difficult to use the cutter to cut, the unwound yarn of the feed yarn bobbin that stays in the staying part without being placed on the rocking member. There is a possibility that the lumped feed yarn bobbins may be placed as they are on the rocking member, but the feed yarn bobbins are to be discharged to the guiding part while maintaining the lump state in most cases by the rocking operation of the rocking member, since the rocking member receives a fixed amount of the feed yarn bobbins from upstream and sends the feed yarn bobbins as they are in the downstream direction. Therefore, the unwound yarn between the lumped feed yarn bobbins has rarely been cut by the cutter.

If a plurality of feed yarn bobbins lumped with entangled unwound yarns are sent to the individualizing part, individualizing is hindered. Therefore, there has been a demand for more reliable elimination of the entanglement of the unwound yarn. Further, since the configuration of Japanese Unexamined Patent Publication No. 2012-184074 uses the rocking member for the fixed amount conveyance, a large space is required for placing and rocking a predetermined amount of feed yarn bobbins, which has been a cause of increasing the size of the configuration.

### BRIEF SUMMARY OF THE INVENTION

An object of the present invention is to reliably eliminate a state where unwound yarns extending from a plurality of bobbins are entangled.

The problems to be solved by the present invention are as described above, and the means for solving such problems and effects are defined in appended claims 1, 7, 17 and 19, together with dependent claims 2 to 6, 8 to 16 and 18 defining preferred embodiments, and will be described next.

According to a first aspect of the present invention, a cutting device having the following configuration is provided. That is, this cutting device is provided on a bobbin movement path on which a plurality of bobbins wound with yarns move. The cutting device includes a limiting section and a first cutting section. The limiting section is provided so as to be movable in a direction intersecting a moving direction of the bobbin with respect to a path surface of the bobbin movement path. This direction intersecting the moving direction may be a vertical direction or a diagonal or slanting direction having a vertical component, for example. The movement along this direction causes the limiting section to move to a first position that is located upper than a path surface of the movement path and causes limitation on passage of the bobbin, and to a second position that is lower than the first position. The first cutting section cuts the yarn which straddles the limiting section. To this end, the limiting section may act as a boundary for the respective bobbin or the bobbins, and the unwound yarn to be cut extends or passes over this boundary.

This enables a state of allowing passage of some of the plurality of yarn supplying bobbins and inhibiting passage of the rest, by the limiting section moving with respect to a yarn supplying bobbin group in which a plurality of yarn supplying bobbins are lumped due to entanglement of the unwound yarns. In other words, a state can be promoted in which the unwound yarn straddles the limiting section. Then, the unwound yarn can be easily cut by the first cutting section. This can eliminate entanglement between the unwound yarns, and facilitate subsequent handling of the yarn supplying bobbin.

In the cutting device described above, the first cutting section is desirably provided in the limiting section and moves integrally with the limiting section.

This enables, while moving the limiting section, the first cutting section to easily cut the unwound yarn that is in contact with the limiting section and receives an effect.

In the cutting device described above, it is desirable that the limiting section alternately repeats movement to the first position to cause limitation on the passage of the bobbin, and movement to the second position to weaken the limitation or cause no limitation on the passage of the bobbin.

This causes repetition of a state where the yarn supplying bobbin can easily pass through the limiting section and a state where the yarn supplying bobbin does not easily pass. Therefore, a state where the unwound yarn straddles the limiting section can be reliably promoted.

In the cutting device described above, it is desirable that the limiting section moves in a direction orthogonal to a plane including a moving direction of the bobbin.

This makes it possible to change the limitation on the passage of the yarn supplying bobbin, with a simple configuration.

In the cutting device described above, it is desirable that a height difference between an upper end portion of the limiting section and the path surface is changed as the limiting section moves.

This makes it possible to change the ease of passage of the yarn supplying bobbin with a simple configuration.

The cutting device described above desirably has the following configuration. That is, the first cutting section repeatedly performs a cutting operation. It is desirable to perform the cutting operation at least when the limiting section is located at the first position among the repeated cutting operations.

This allows the first cutting section to perform the cutting operation in a state where slackening of the unwound yarn is small, enabling reliable cutting of the unwound yarn.

According to a second aspect of the present invention, a bobbin conveying device having the following configuration is provided. That is, this bobbin conveying device includes the cutting device described above and a conveyance path. The conveyance path forms at least a part of the bobbin movement path. The limiting section of the cutting device is arranged downstream of the conveyance path in a moving direction of the bobbin on the conveyance path.

This enables conveyance of the yarn supplying bobbin while effectively eliminating entanglement of the unwound yarn in the bobbin conveying device.

The bobbin conveying device described above desirably has the following configuration. That is, this bobbin conveying device includes a second cutting section that cuts the yarn. The second cutting section is arranged downstream of the limiting section in the bobbin movement path.

This can ensure a plurality of opportunities for cutting the unwound yarn, enabling more reliable elimination of entanglement of the unwound yarn.

The bobbin conveying device described above desirably has the following configuration. That is, a suction port is formed in the bobbin movement path, on a downstream side of the limiting section and an upstream side of the second cutting section. To the suction port, a suction source for suction is connected.

This allows the unwound yarn to be held by the suction port, for cutting by the first cutting section or the second cutting section.

In the bobbin conveying device described above, the suction source is driven desirably while the limiting section is moving upward.

By performing the suction at the suction port when the limiting section is moved, which is when the yarn supplying bobbin and the unwound yarn are easily moved by being pushed, the unwound yarn can be efficiently caught by the suction port.

The bobbin conveying device described above desirably has the following configuration. That is, the limiting section is formed with a first guide recess that guides the yarn. The first cutting section cuts the yarn that has entered the first guide recess.

This enables cutting by the first cutting section while stabilizing a position of the unwound yarn by the first guide recess.

In the bobbin conveying device described above, it is desirable that an end portion of the first guide recess opposite to an opened side is higher than the path surface, in a state where the limiting section is located at the first position.

This enables cutting by the first cutting section while maintaining a stretched state of the unwound yarn that has entered the first guide recess. Therefore, stability and reliability of cutting can be improved.

The bobbin conveying device described above desirably has the following configuration. That is, this bobbin conveying device has a second guide recess that guides the yarn. Further, the bobbin conveying device includes a guiding member that guides movement of the bobbin on a downstream side of the limiting section, and a second cutting section that is arranged downstream of the limiting section in the bobbin movement path and that cuts the yarn that has entered the second guide recess.

This enables cutting by the second cutting section while stabilizing a position of the unwound yarn by the second guide recess.

In the bobbin conveying device, the second cutting section is desirably provided in the second guide recess.

This can achieve a compact configuration of the guiding member.

In the bobbin conveying device, in a viewpoint from a direction orthogonal to the moving direction of the bobbin on the conveyance path in a horizontal direction, it is desirable that an extending direction of the first guide recess formed in the limiting section is different from an extending direction of the second guide recess formed in the guiding member.

This makes it possible to increase a probability that the unwound yarn is to enter any of the recesses to be cut.

The bobbin conveying device described above desirably has the following configuration. That is, in a viewpoint from a direction orthogonal to the moving direction of the bobbin on the conveyance path in a horizontal direction, the first guide recess formed in the limiting section opens perpendicularly upward or slantingly upward with a downstream side facing upward. The second guide recess formed in the guiding member opens toward a downstream direction in a horizontal direction or slantingly downward with a downstream side facing downward, in a viewpoint from a direction orthogonal to the moving direction of the bobbin on the conveyance path in a horizontal direction.

This makes it easier for the unwound yarn to enter each of the first guide recess and the second guide recess. As a result, the cutting can be reliably carried out.
The first and second recesses may appropriately be provided in the form of a groove or a cutout, and the like, for example.

According to a third aspect of the present invention, a bobbin supplying device having the following configuration is provided. That is, this bobbin supplying device includes the bobbin conveying device described above and a bobbin aligning device. The bobbin aligning device is arranged downstream of the bobbin conveying device in the bobbin movement path.

This allows the yarn supplying bobbin to be smoothly supplied, while eliminating a state where a plurality of yarn supplying bobbins are gathered and lumped due to entanglement of the unwound yarn, or a state where the unwound yarn extends long from the yarn supplying bobbin.

In the bobbin supplying device described above, the bobbin aligning device is desirably a vibrating feeder.

This enables smooth conveyance of the yarn supplying bobbin in the vibrating feeder.

The bobbin supplying device described above desirably has the following configuration. That is, this bobbin supplying device includes a control section. The control section moves the limiting section while the conveyance path and the bobbin aligning device are driven.

This allows the limiting section to be operated while the bobbin conveying device and the bobbin aligning device are substantially conveying the yarn supplying bobbin.

According to a further aspect of the present invention, also an automatic winder system including a bobbin supplying device as described above is provided.

In addition, also a method of cutting yarn unwound from a respective bobbin of a plurality of bobbins being conveyed along a movement path is provided according to another aspect of the present invention. The method comprises to intermittingly limit and release the passage of the bobbins along the movement path. To this end, a limiting section being moveable in a direction intersecting a moving direction of the bobbins may be used to advantage. According to the invention, a yarn, which straddles the limiting section, is cut.

### BRIEF DESCRIPTION OF THE DRAWINGS

FIG. 1 is a schematic view of an automatic winder system including a bobbin supplying device according to an embodiment of the present invention;
FIG. 2 is a schematic view of the bobbin supplying device;
FIG. 3 is a perspective view of the bobbin supplying device;
FIG. 4 is a view illustrating a configuration of an upstream cutting device and a downstream cutting device included in the bobbin conveying device;
FIG. 5 is a block diagram illustrating a configuration for control of the upstream cutting device and the downstream cutting device;
FIGS. 6A and 6B are an explanatory views illustrating a state where an unwound yarn extending from the yarn supplying bobbin and being entangled is cut by the upstream cutting device;
FIGS. 7A and 7B are explanatory views illustrating a state where an unwound yarn is caught by a suction port after the unwound yarn is cut by the upstream cutting device in the state of FIGS. 6A and 6B;
FIGS. 8A and 8B are explanatory views illustrating a state where an unwound yarn extending from the yarn supplying bobbin is caught by the suction port before the yarn supplying bobbin passes through a limiting section; and
FIG. 9 is an explanatory view illustrating a state where the yarn supplying bobbin has passed through the limiting section in a state where the unwound yarn is not cut by the upstream cutting device, from the state of FIGS. 8A and 8B.

### DETAILED DESCRIPTION OF PREFERRED EMBODIMENTS

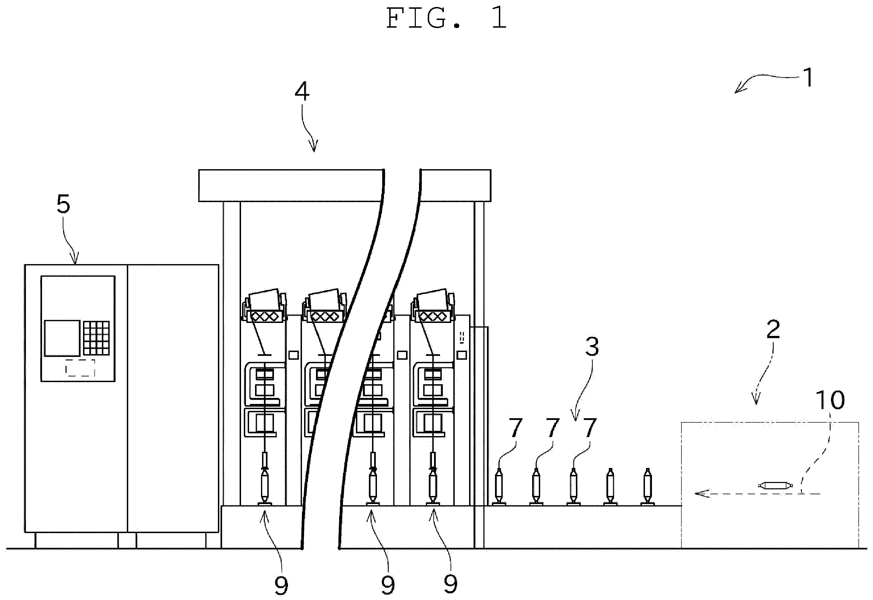

Next, an embodiment of the present invention will be described with reference to the drawings. First, with reference to FIG. 1, an automatic winder system 1 including a bobbin supplying device 2 according to an embodiment of the present invention will be described. FIG. 1 is a schematic view of the automatic winder system 1. As illustrated in FIG. 1, the automatic winder system 1 includes the bobbin supplying device 2, a bobbin processing device 3, an automatic winder 4, and a machine control device 5.

The bobbin supplying device 2 conveys a yarn supplying bobbin (a bobbin) 7 on which a yarn is wound by a spinning machine that spins the yarn, and supplies to the bobbin processing device 3. The bobbin processing device 3 performs a predetermined process for smoothly unwinding the yarn wound around the yarn supplying bobbin 7, by the automatic winder 4. The automatic winder 4 has a plurality of winding units 9. Each winding unit 9 unwinds the yarn from the yarn supplying bobbin 7, and winds the yarn around a winding bobbin to form a package while removing a yarn defect. The machine control device 5 integrally controls the entire automatic winder system 1.

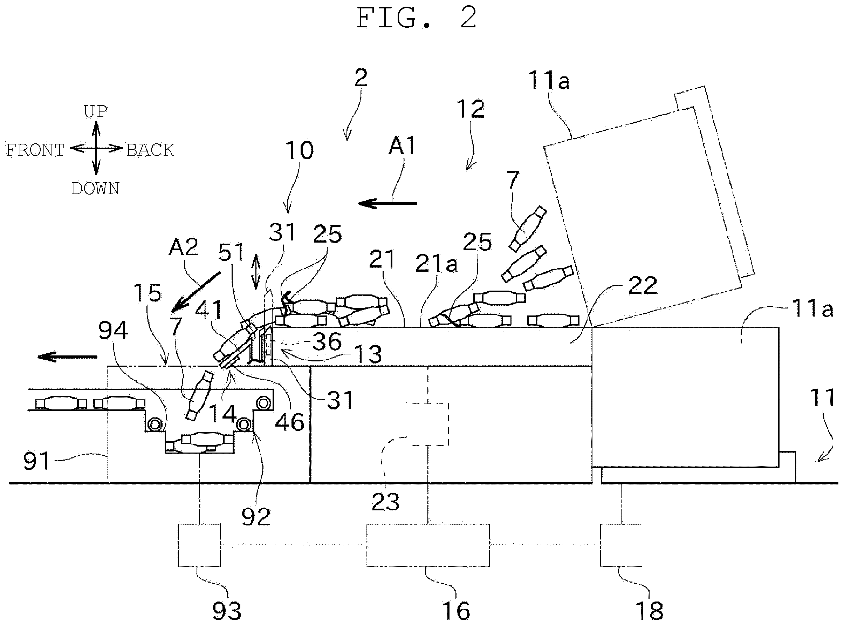

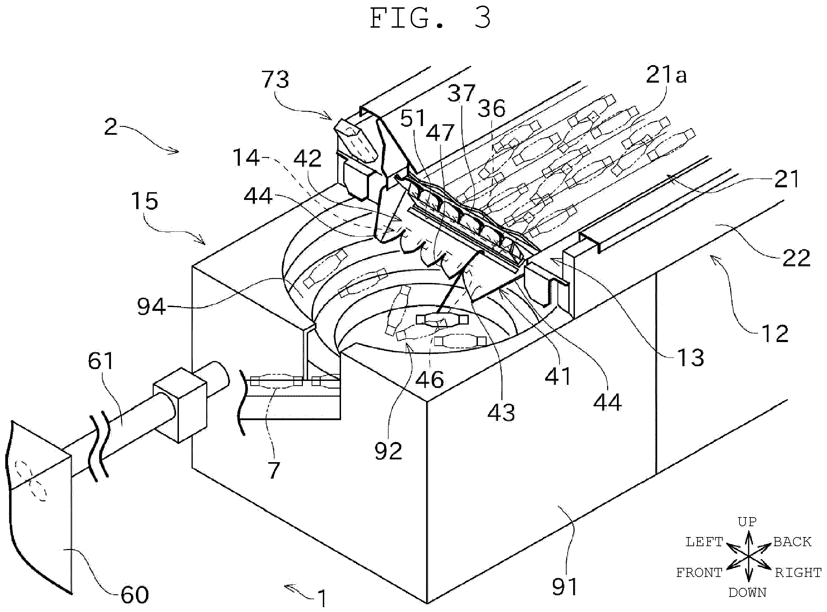

Next, the bobbin supplying device 2 will be described with reference to FIGS. 2 and 3. FIG. 2 is a schematic view of the bobbin supplying device 2. FIG. 3 is a perspective view of the bobbin supplying device 2.

The bobbin supplying device 2 has a movement path (a bobbin movement path) 10 for movement of the yarn supplying bobbin 7, and moves the yarn supplying bobbin 7 in a direction of arrow A1 in FIG. 2 along the movement path 10. This realizes the supply of the yarn supplying bobbin 7 to the bobbin processing device 3.

As illustrated in FIG. 2, the bobbin supplying device 2 includes a bobbin conveying device 12, a bobbin aligning device 15, and a control device (a control section) 16.

The bobbin conveying device 12 includes a bobbin receiving device 11, a conveyance path 21, a discharge guide (a guiding member) 41, an upstream cutting device (a cutting device) 13, and a downstream cutting device 14.

The bobbin receiving device 11 is arranged at an end portion of the bobbin supplying device 2. To the bobbin receiving device 11, a bobbin box 11a can be detachably attached. The bobbin box 11a is a container whose upper part is open, and can internally accommodate a plurality of yarn supplying bobbins 7 on which yarns are wound. The bobbin receiving device 11 can turn the bobbin box 11a such that an opened portion is directed slantingly downward, by driving a hydraulic cylinder 18 as an actuator. As a result, the yarn supplying bobbin 7 accommodated in the bobbin box 11a can be loaded into the conveyance path 21.

The conveyance path 21 is a linear passage that conveys the plurality of yarn supplying bobbins 7 supplied from the bobbin box 11a. The conveyance path 21 is arranged adjacent to the bobbin receiving device 11. The bobbin conveying device 12 includes a loading section 22 formed with a path surface 21a of the conveyance path 21, and a vibration motor 23 that vibrates the loading section 22. By the vibration motor 23 vibrating the loading section 22, the plurality of yarn supplying bobbins 7 placed on the conveyance path 21 are conveyed in a direction away from the bobbin receiving device 11.

The path surface 21a of the conveyance path 21 corresponds to the path surface of the movement path of the yarn supplying bobbin 7, and is arranged substantially along a horizontal direction. In order to align orientation of the yarn supplying bobbins 7, the path surface 21a is formed in a wave shape as illustrated in FIG. 3. However, the path surface 21a may be formed as a flat surface, for example.

Hereinafter, for convenience of description, an upstream side in a moving direction (the direction indicated by arrow A1 in FIG. 2) of the yarn supplying bobbin 7 on the conveyance path 21 may be referred to as a back side of the bobbin supplying device 2, and a downstream side may be referred to as a front side in the bobbin supplying device 2. Further, a direction perpendicular to both the moving direction (the front-back direction) of the yarn supplying bobbin 7 and a vertical direction may be referred to as a left-right direction. The left-right direction can also be called as a width direction of the conveyance path 21. These directions are illustrated in FIGS. 2 and 3 and the like.

The discharge guide 41 is connected to a downstream end portion (a front end portion) of the conveyance path 21. The discharge guide 41 guides the yarn supplying bobbin 7 conveyed along the conveyance path 21 so as to be discharged toward an appropriate position of the bobbin aligning device 15. The detailed structure of the discharge guide 41 will be described later.

The conveyance path 21 and the discharge guide 41 form a part of the movement path 10 of the yarn supplying bobbin 7 from the bobbin box 11a to the bobbin processing device 3. In general, the plurality of yarn supplying bobbins 7 are supplied from the bobbin box 11a to the bobbin conveying device 12, and then conveyed on the conveyance path 21 in a piled state of being stacked on each other. Therefore, for example, when the yarn supplying bobbin 7 moves on the path surface 21a of the conveyance path 21 or when the piled state of the yarn supplying bobbins 7 collapses, friction occurs on a surface portion of the yarn supplying bobbins 7. As a result, the yarn may be unwound from the surface portion of the yarn supplying bobbin 7, and the yarn may be drawn out long as the yarn supplying bobbin 7 is conveyed.

In the following, the yarn drawn out from the yarn supplying bobbin 7 in this manner may be referred to as an unwound yarn 25. The unwound yarn 25 may also occur at a stage where the yarn supplying bobbin 7 is discharged from the bobbin box 11a or at a stage therebefore, in addition to the time of conveyance on the conveyance path 21. When the unwound yarns 25 become entangled between the plurality of yarn supplying bobbins 7, two or more yarn supplying bobbins 7 are connected to each other, which inhibits smooth conveyance.

The upstream cutting device 13 cuts the unwound yarn 25 extending from the yarn supplying bobbin 7. The upstream cutting device 13 is arranged near the downstream end portion of the conveyance path 21 in a conveying direction (the moving direction of the yarn supplying bobbin 7 on the conveyance path 21). The detailed configuration of the upstream cutting device 13 will be described later.

Similarly to the upstream cutting device 13, the downstream cutting device 14 cuts the unwound yarn 25 extending from the yarn supplying bobbin 7. The downstream cutting device 14 is arranged downstream of the upstream cutting device 13, specifically, at the discharge guide 41. In the movement path 10 of the yarn supplying bobbin 7, the downstream cutting device 14 is arranged between the upstream cutting device 13 and the bobbin aligning device 15. The detailed configuration of the downstream cutting device 14 will be described later.

The bobbin aligning device 15 aligns the plurality of yarn supplying bobbins 7 in one line and conveys one by one toward downstream in the conveying direction (toward the above-described bobbin processing device 3). The bobbin aligning device 15 is arranged downstream of the bobbin conveying device 12 in the movement path 10 of the yarn supplying bobbin 7. As illustrated in FIG. 2, the bobbin aligning device 15 has a housing 91, a bowl (a receiving section) 92, and a vibration solenoid 93. The bowl 92 is a container that opens upward, and can internally accommodate the yarn supplying bobbin 7. The bowl 92 is arranged inside the housing 91 and below the downstream cutting device 14. On an inner wall of the bowl 92, there is formed a spiral passage 94 through which the yarn supplying bobbin 7 passes in a substantially horizontal position. The vibration solenoid 93 is connected to the bowl 92. By the vibration solenoid 93 vibrating the bowl 92, the yarn supplying bobbin 7 can be conveyed along the passage 94.

The control device 16 is configured as a known computer including a CPU, ROM, RAM, and the like. The control device 16 controls the hydraulic cylinder 18, the upstream cutting device 13, the downstream cutting device 14, the vibration motor 23, the vibration solenoid 93, and the like.

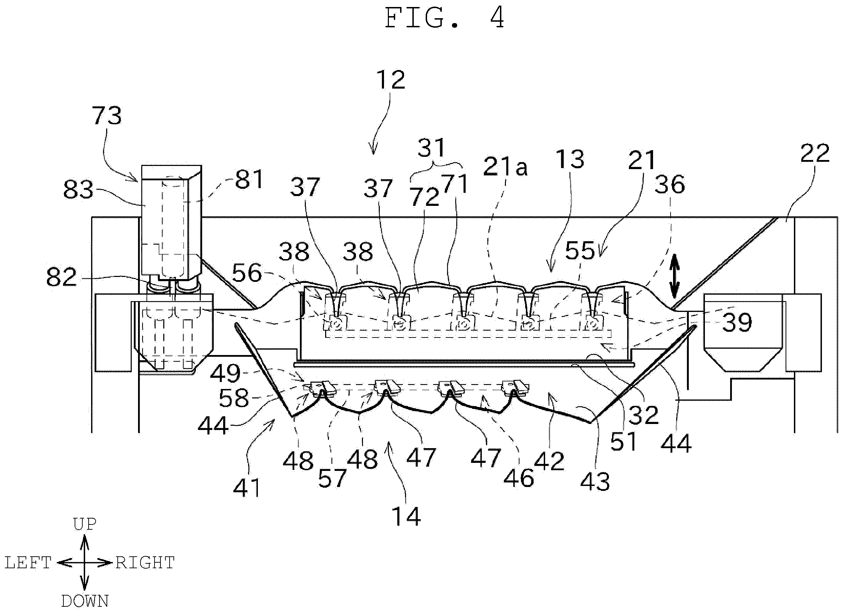

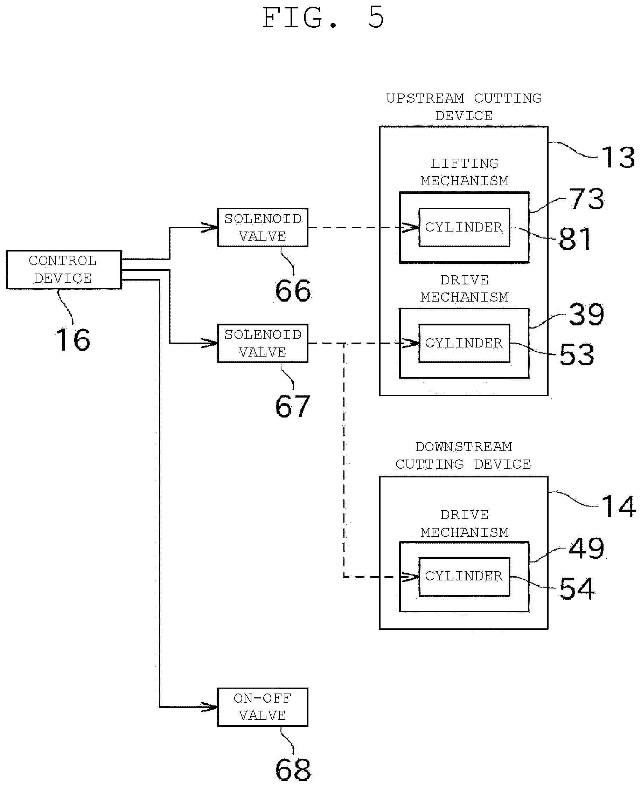

Next, the upstream cutting device 13 will be described mainly with reference to FIG. 4. FIG. 4 is a view illustrating a configuration of the upstream cutting device 13 and the downstream cutting device 14 included in the bobbin conveying device 12. FIG. 5 is a block diagram illustrating a configuration for control of the upstream cutting device 13 and the downstream cutting device 14.

The upstream cutting device 13 cuts the unwound yarn 25 extending from the yarn supplying bobbin 7, while adjusting an amount of the plurality of yarn supplying bobbins 7 conveyed along the conveyance path 21 and sent to the downstream side in the conveying direction. As illustrated in FIG. 4, the upstream cutting device 13 includes a gate section (a limiting section) 31, an upstream cutting section (a first cutting section) 36, and a lifting mechanism 73.

The gate section (or limiting section) 31 is arranged between the downstream end portion of the conveyance path 21 and an upstream end portion of the discharge guide 41. As illustrated in FIG. 2, the gate section 31 is provided so as to be movable in a direction which intersects the movement path 10. According to the shown embodiment the gate section is movable in a vertical direction. Specifically, the gate section 31 moves vertically with respect to the path surface 21a of the conveyance path 21. This direction can also be said to be a direction intersecting perpendicularly with a conveying direction (the direction of arrow A1) of the yarn supplying bobbin 7 in the bobbin conveying device 12, and can also be said to be a direction in which a height of the gate section 31 is changed. The direction in which the gate section 31 moves is substantially perpendicular to the path surface 21a. However, according to another feasible embodiment the gate section 31 may be movable in a diagonal or slanting direction, for example, to achieve a vertical movement component. However, one may even consider that the gate section is movable in a horizontal direction, e.g. the left-right direction. In this case, the gate section 31 may be provided with an upper rim extending in a slanting or diagonal direction.

When the gate section 31 ascends, an upper end portion of the gate section 31 is located upper than the path surface 21a of the conveyance path 21, which forms a step projecting upward with respect to the path surface 21a. This step enables blocking such that the yarn supplying bobbin 7 on the conveyance path 21 is less likely to flow into the bobbin aligning device 15. This limitation allows a plurality of yarn supplying bobbins 7 to be temporarily retained at a downstream end portion of the conveyance path 21, and inhibits flowing of a large amount of yarn supplying bobbins 7 at once into the bobbin aligning device 15. When the gate section 31 descends, the upper end portion of the gate section 31 is located at the same level as or lower than the path surface 21a of the conveyance path 21, so that the step is substantially eliminated. In the description below, a position causing formation of the step on which the yarn supplying bobbin 7 needs to run over for passage on the path surface 21a may be referred to as a limiting position (a first position) of the gate section 31, and a position causing no step may be referred to as an allowing position (a second position).

The gate section 31 is formed by stacking members formed by bending processing on metal plates, for example. The gate section 31 includes a first lifting member 71 facing a downstream end portion of the conveyance path 21, and a second lifting member 72 arranged on a downstream side (a front side) of the first lifting member 71. The first lifting member 71 is formed in a substantially rectangular shape having a wide width such that the downstream end portion of the conveyance path 21 can be closed over the entire width. The first lifting member 71 is formed with an extension portion extending on both sides in a width direction of the conveyance path 21, and the extension portion on one side is connected to the lifting mechanism 73. The second lifting member 72 is fixed to the first lifting member 71. Between the first lifting member 71 and the second lifting member 72, a space for installing the upstream cutting section 36 and the like is formed. Individual upper end portions of the first lifting member 71 and the second lifting member 72 are substantially aligned vertically. Further, a shape of each upper end portion of the second lifting member 72 corresponds to a shape of the upper end portion of the first lifting member 71.

As illustrated in FIG. 4, at an end portion of the discharge guide 41 on a side closer to the conveyance path 21, a rectangular cutout is formed. By attaching the discharge guide 41 to a fixing frame (not illustrated) of the bobbin conveying device 12, a lifting port 32 is formed in the cutout portion. The lifting port 32 is arranged near the downstream end portion of the conveyance path 21, and extends in a width direction of the conveyance path 21. Into this lifting port 32, the gate section 31 (the first lifting member 71 and the second lifting member 72) is inserted.

The lifting mechanism 73 can move the gate section 31 vertically. The lifting mechanism 73 has a cylinder 81. The cylinder 81 has a piston rod 82 that is arranged so as to be movable substantially vertically. A distal end portion of the piston rod 82 is connected to an appropriate position of the first lifting member 71 included in the gate section 31. The cylinder 81 is connected to a compressed air source (not illustrated). When compressed air is supplied to the cylinder 81 from the compressed air source through a pipe (not illustrated), the cylinder 81 expands. When the compressed air is discharged from the cylinder 81, the cylinder 81 contracts. The supply and discharge of the compressed air can be switched by a solenoid valve 66 illustrated in FIG. 5. The solenoid valve 66 is controlled by the control device 16. The cylinder 81 is covered with a cover 83 illustrated in FIG. 4 in order to avoid contact with the yarn supplying bobbin 7.

As the cylinder 81 expands and contracts, the first lifting member 71 and the second lifting member 72 (that is, the gate section 31) move vertically. A position of a lower end of a lifting stroke corresponds to the above-described allowing position, and a position near the upper end corresponds to the limiting position. The positions of the lower end and the upper end of the lifting stroke can be freely set.

By the lifting mechanism 73 lifting and lowering the gate section 31 periodically, it is possible to alternately repeat a state where the yarn supplying bobbin 7 on the conveyance path 21 is easily sent to the downstream side, and a state where the yarn supplying bobbin 7 on the conveyance path 21 is not easily sent to the downstream side. That is, feeding momentum of the yarn supplying bobbin 7 on the conveyance path 21 can be changed. Therefore, even if a plurality of yarn supplying bobbins 7 are connected due to entanglement of the unwound yarn 25, the yarn supplying bobbin 7 blocked by the gate section 31 and the yarn supplying bobbin 7 sent downstream without being blocked can be separated. Then, it is possible to promote the unwound yarn 25 to be stretched between the blocked yarn supplying bobbin 7 and the unblocked yarn supplying bobbin 7.

As illustrated in FIG. 4, in the gate section 31, on an upper part of each of the first lifting member 71 and the second lifting member 72, a plurality of upstream guide recesses (first guide recesses) 37 extending from an upper end portion (an edge portion) to a lower side (an inner side) are formed. The plurality of upstream guide recesses 37 are arranged to be aligned in the left-right direction at appropriate intervals. Each upstream guide recess 37 is arranged so as to open towards the upper side. The upstream guide recess 37 is formed in a curved taper shape so that a width in the left-right direction becomes narrower as going from the upper side to the lower side.

This enables smooth introduction of the unwound yarn 25 that passes above the gate section 31 into the upstream guide recess 37, with the gate section 31 ascending, or the unwound yarn 25 being stretched. Note that a shape of the upstream guide recess 37 is not particularly limited. For example, the upstream guide recess 37 may be formed in a linearly tapered shape or a non-tapered shape. Further, any number of upstream guide recesses 37 may be adopted.

As illustrated in FIGS. 2 and 4, the upstream cutting section 36 is arranged inside the gate section 31 (between the first lifting member 71 and the second lifting member 72). The upstream cutting section 36 has a scissors-shaped cutter 38 and a drive mechanism 39 that operates the cutter 38.

A plurality of cutters 38 are arranged corresponding to the upstream guide recesses 37. Each cutter 38 is arranged near a lower end portion of the upstream guide recess 37. Each cutter 38 includes a fixed blade and a movable blade.

The movable blade may be moveable in a sideward direction or pivotable in a pivoting direction with respect to the fixed blade, between an opened position, in which there is a gap between a cutting edge of the movable blade and a cutting edge of the fixed blade, and a closed position, in which this gap between these cutting edges is closed, as is conventionally known from cutting devices in the present technical field. The gap may be aligned with the respective guide recess. Alternative realizations of the cutters are possible, however.

The drive mechanism 39 has a rack 55 and a plurality of pinion gears 56 that mesh with the rack 55. Each of the plurality of pinion gears 56 is connected to the movable blade of the cutter 38. The drive mechanism 39 further includes a cylinder 53 illustrated in FIG. 5. The rack 55 is attached to this cylinder 53. The supply and discharge of compressed air to the cylinder 53 can be switched by a solenoid valve 67. The operation of the solenoid valve 67 is controlled by the control device 16.

When the cylinder 53 operates, the movable blade of each cutter 38 is driven via the rack 55 and the pinion gear 56, and closes with respect to the fixed blade. This cutting operation cuts the unwound yarn 25 that has entered a lower portion of the upstream guide recess 37 from above.

In the present embodiment, the upstream cutting section 36 is attached to the gate section 31, and moves integrally with the gate section 31. That is, the upstream cutting section 36 ascends in response to ascending of the gate section 31, and descends in response to descending of the gate section 31. During one cycle of ascending and descending of the gate section 31, a timing at which the movable blade of the cutter 38 closes with respect to the fixed blade (hereinafter, may be referred to as a cutting timing of the upstream cutting section 36) appears multiple times. At least one of a plurality of cutting timings coincides with a timing at which the gate section 31 is at a highest position (the first position) where the gate section 31 ascends most. This enables a cutting operation of the cutter 38 to be performed with small slackening of the unwound yarn 25, which enables reliable cutting of the unwound yarn 25. However, the cutting operation of the cutter 38 may be performed at any timing.

The control device 16 controls the lifting mechanism 73 so as to repeat the ascending and descending of the gate section 31, in a state where the conveyance path 21 of the bobbin conveying device 12 is driven and the bobbin aligning device 15 is driven. Further, the control device 16 controls the lifting mechanism 73 not to perform ascending or descending when at least one of the conveyance path 21 or the bobbin aligning device 15 is not driven. Further, the control device 16 controls the upstream cutting section 36 to perform the cutting operation in conjunction with the ascending and descending operation of the gate section 31. By operating the gate section 31 and the upstream cutting section 36 exclusively when it is highly necessary to cut the unwound yarn 25, energy saving can be realized.

Next, the downstream cutting device 14 will be described with reference to FIGS. 3 and 4.

The downstream cutting device 14 cuts the unwound yarn 25 extending from the yarn supplying bobbin 7, while guiding the plurality of yarn supplying bobbins 7 conveyed by the bobbin conveying device 12, to the downstream side in a conveying direction (the bobbin aligning device 15 side). The downstream cutting device 14 has a downstream cutting section (a second cutting section) 46 that is for cutting the unwound yarn 25.

The discharge guide 41 is a member formed by bending processing on a metal plate, for example. The discharge guide 41 is arranged above the bowl 92 of the bobbin aligning device 15. The discharge guide 41 includes a bottom portion 43 and two side portions 44. The bottom portion 43 is formed with a guide path 42 that extends downward and frontward from the conveyance path 21 of the bobbin conveying device 12. Each of the two side portions 44 extends upward from the left and right end portions of the bottom portion 43.

The guide path 42 forms a part of the movement path 10, and is inclined so as to be located downward as going forward. The yarn supplying bobbin 7 sent to the discharge guide 41 slides by its own weight along the guide path 42, and falls from an end of the guide path 42. A direction in which the plurality of yarn supplying bobbins 7 are guided along the guide path 42 (a direction of arrow A2 in FIG. 2. Hereinafter, may be referred to as a guiding direction) intersects the vertical direction. Note that the guide path 42 may be flat or curved.

The discharge guide 41 is formed with a plurality of downstream guide recesses (second guide recesses) 47. The plurality of downstream guide recesses 47 are arranged to be aligned at appropriate intervals in a width direction (the left-right direction) of the discharge guide 41. Each of the downstream guide recesses 47 is arranged so as to open towards a slantingly lower side with a front side facing downward. The downstream guide recess 47 is formed to be elongated from a downstream end portion of the bottom portion 43 toward the upstream side.

The downstream guide recess 47 is formed in a curved taper shape such that, in plan view, a width in the left-right direction becomes narrower as going from the downstream side to the upstream side in the moving direction of the yarn supplying bobbin 7. Note that a shape of the downstream guide recess 47 is not particularly limited. For example, the downstream guide recess 47 may be formed in a linearly tapered shape or a non-tapered shape. Further, any number of downstream guide recesses 47 may be adopted.

The side portion 44 of the discharge guide 41 inhibits falling of the yarn supplying bobbin 7 moving on the guide path 42 from a side of the guide path 42. The two side portions 44 are arranged in a taper shape such that a distance in between becomes narrower as going toward the downstream side. This enables guiding of the yarn supplying bobbin 7 by the side portion 44 such that the yarn supplying bobbin 7 is discharged to a central portion of the bowl 92 in plan view.

As illustrated in FIG. 4, the downstream cutting section 46 is arranged below the bottom portion 43 of the discharge guide 41. The downstream cutting section 46 has a scissors-shaped cutter 48 and a drive mechanism 49 that operates the cutter 48.

A plurality of cutters 48 are arranged corresponding to the downstream guide recesses 47. Each of the cutters 48 is arranged below an upstream end portion of the downstream guide recess 47 in the guiding direction, and is provided to be capable of being located in the downstream guide recess 47 in plan view. Each cutter 48 has a fixed blade and a movable blade.

The movable blade may be moveable in a sideward direction or pivotable in a pivoting direction with respect to the fixed blade, between an opened position, in which there is a gap between a cutting edge of the movable blade and a cutting edge of the fixed blade, and a closed position, in which this gap between these cutting edges is closed, as is conventionally known from cutting devices in the present technical field. The gap may be aligned with the respective guide recess. Alternative realizations of the cutters are possible, however.

A configuration of the drive mechanism 49 is substantially similar to that of the drive mechanism 39 of the upstream cutting section 36. Briefly explaining, the movable blade of the cutter 48 is driven by a rack 57 and a pinion gear 58. The drive mechanism 49 includes a cylinder 54 illustrated in FIG. 5 in addition to the rack 57 and the pinion gear 58. By driving the rack 57 with the cylinder 54, the movable blade of the cutter 48 closes with respect to the fixed blade. As a result, the cutter 48 cuts the unwound yarn 25 that has entered the upstream end portion of the downstream guide recess 47 in the guiding direction. The driving of the cylinder 54 is controlled by the control device 16 via the solenoid valve 67.

As illustrated in FIGS. 3 and 4, a suction port 51 extending in the width direction (the left-right direction) of the guide path 42 is formed in the bottom portion 43 of the discharge guide 41. The suction port 51 is arranged in the discharge guide 41 at an intermediate portion in the moving direction of the yarn supplying bobbin 7. Specifically, the suction port 51 is arranged near the downstream side of the lifting port 32 where the above-described gate section 31 is arranged, along the lifting port 32. The suction port 51 penetrates the bottom portion 43 vertically. The suction port 51 is arranged downstream of the gate section 31 and upstream of the downstream guide recess 47, in the moving direction of the yarn supplying bobbin 7.

As illustrated in FIG. 3, the automatic winder system 1 includes a blower (a suction source) 60. To the blower 60, the suction port 51 of the discharge guide 41 is connected via an appropriate pipe 61. This allows the unwound yarn 25 extending from the yarn supplying bobbin 7 to be sucked by the suction port 51.

Between the suction port 51 and the blower 60, an on-off valve 68 illustrated in FIG. 5 is arranged. The on-off valve 68 can switch between a state where a negative pressure is applied to the suction port 51 and a state where a negative pressure is not applied. The operation of the on-off valve 68 is controlled by the control device 16. The suction at the suction port 51 is performed at least when the gate section 31 and the upstream cutting section 36 of the upstream cutting device 13 are operating, or when the downstream cutting section 46 of the downstream cutting device 14 is operating.

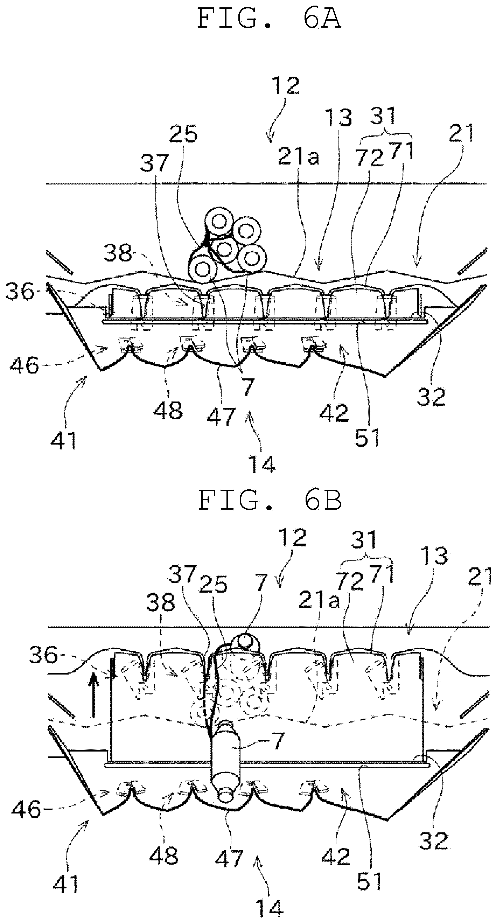

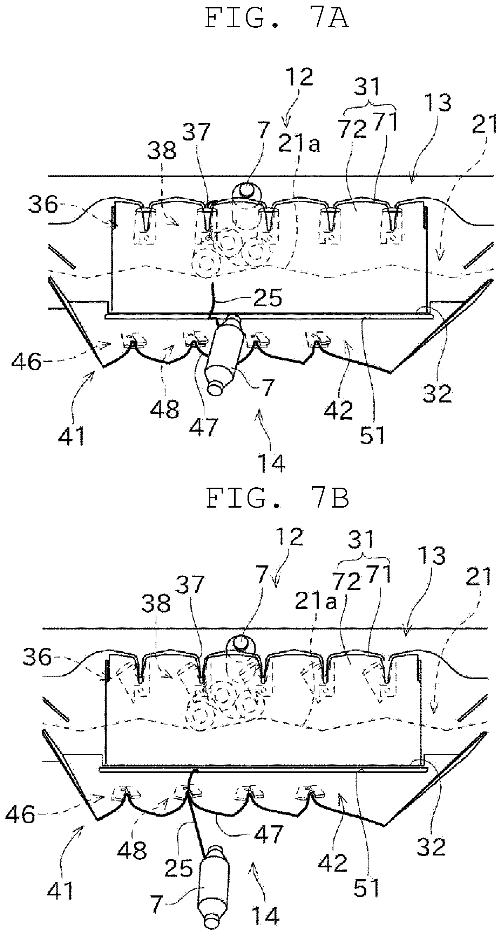

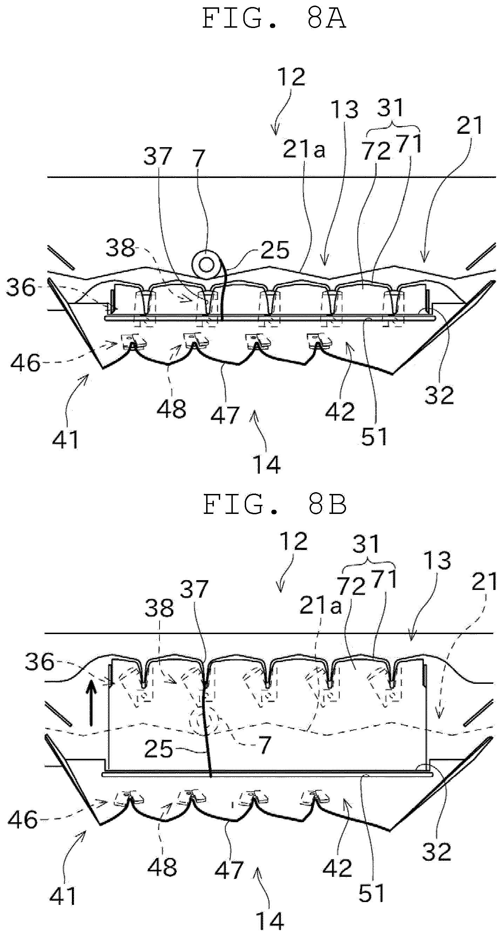

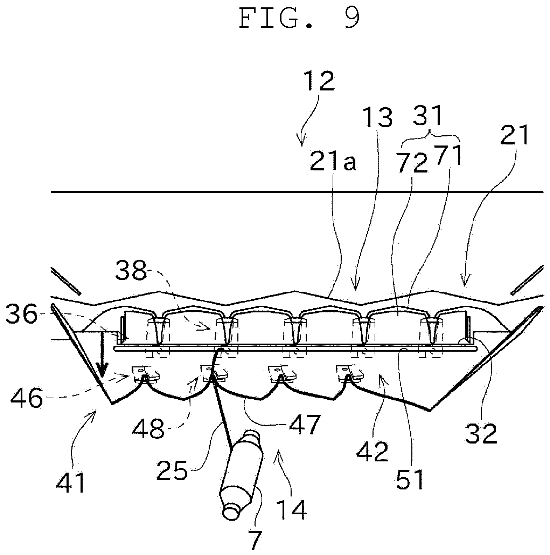

Next, the cutting operation of the unwound yarn 25 by the upstream cutting device 13 and the downstream cutting device 14 will be described with reference to FIGS. 6A and 6B to 9. FIGS. 6A and 6B and 7A and 7B sequentially illustrate a state where the unwound yarn 25 is cut when a plurality of yarn supplying bobbins 7 are lumped. FIGS. 8A and 8B and 9 sequentially illustrate a state where the unwound yarn 25 extending from a single yarn supplying bobbin 7 is cut. In the bobbin conveying device 12, a large number of yarn supplying bobbins 7 are actually conveyed. However, in these figures, in order to avoid complication, the yarn supplying bobbins 7 other than the target yarn supplying bobbin 7 are omitted.

The yarn supplying bobbin 7 supplied to the bobbin conveying device 12 with use of the bobbin receiving device 11 is conveyed to the downstream end portion of the conveyance path 21 in a conveying direction. When the unwound yarn 25 of one yarn supplying bobbin 7 and the unwound yarn 25 of another yarn supplying bobbin 7 are entangled while the plurality of yarn supplying bobbins 7 are being conveyed (moving), as illustrated in FIG. 6A, a lumped bobbin group is formed.

When the lumped bobbin group approaches the upstream cutting device 13, the gate section 31 alternately repeats ascending and descending to contact and push up the yarn supplying bobbin 7. This loosens the lumped bobbin group as illustrated in an upper side of FIG. 6B. Further, difficulty of passage of the yarn supplying bobbin 7 is periodically changed by the ascending and descending operation of the gate section 31. Therefore, it is possible to prompt to block some of the yarn supplying bobbins 7 included in the lumped bobbin group on the upstream side of the gate section 31, and to allow the remaining yarn supplying bobbins 7 to pass through the gate section 31.

As illustrated in FIG. 6B, consider a state where one yarn supplying bobbin 7 having been included in lumped bobbin group passes over the gate section 31 and reaches the discharge guide 41, and the remaining yarn supplying bobbins 7 are blocked by the gate section 31. In this state, the unwound yarn 25 is located between the yarn supplying bobbins 7 so as to straddle the gate section 31. In other words, the unwound yarn 25 extends over or bridges or passes over the gate section (31). At this time, the unwound yarn 25 passes above the gate section 31 at various positions. However, along with pulling of the unwound yarn 25 by the yarn supplying bobbin 7 sliding down along the guide path 42 or with the ascending operation of the gate section 31, the unwound yarn 25 moves so as to enter any of the plurality of upstream guide recesses 37, as indicated by a chain double-dashed line in FIG. 6B. Since the upstream guide recess 37 is formed in a curved taper shape, the unwound yarn 25 can be smoothly introduced into the upstream guide recess 37. The unwound yarn 25 that has entered the upstream guide recess 37 is cut by the cutter 38 of the upstream cutting section 36. This can separate the yarn supplying bobbins 7 included in the lumped bobbin group from each other.

When the yarn supplying bobbin 7 slides down on the discharge guide 41, the suction port 51 can catch the unwound yarn 25 extending from the yarn supplying bobbin 7. The unwound yarn 25 is entangled so as to connect the yarn supplying bobbin 7 blocked by the gate section 31 and the yarn supplying bobbin 7 that has slid down after passing through the gate section 31. When this unwound yarn 25 is cut by the upstream cutting device 13, the unwound yarn 25 that has become free may be immediately caught by the suction port 51. FIG. 7A illustrates a state at the moment when the unwound yarn 25 is caught by the suction port 51.

After the unwound yarn 25 is caught by the suction port 51, the unwound yarn 25 is stretched to straddle a downstream end portion of the discharge guide 41 between the suction port 51 and the yarn supplying bobbin 7 having fallen from the discharge guide 41. At this time, the unwound yarn 25 passes through the downstream end portion of the discharge guide 41 at various positions. However, by the yarn supplying bobbin 7 pulling the unwound yarn 25 with its own weight, or by an airflow at the suction port 51 pulling the unwound yarn 25, as illustrated in FIG. 7B, the unwound yarn 25 moves so as to enter any of the plurality of downstream guide recesses 47. Since the downstream guide recess 47 is formed in a curved taper shape, the unwound yarn 25 can be smoothly introduced into the downstream guide recess 47. The unwound yarn 25 that has entered the downstream guide recess 47 is cut by the downstream cutting section 46. A distal end portion of the unwound yarn 25 that has been cut is suctioned and removed through the suction port 51.

Meanwhile, as illustrated in FIG. 8A, for example, when the unwound yarn 25 extends long from a single yarn supplying bobbin 7 located on the conveyance path 21, it is also conceivable that the unwound yarn 25 hangs down toward the discharge guide 41 and is to be caught by the suction port 51. In this case, by the suctioning of the unwound yarn 25 at the suction port 51 and ascending of the gate section 31, as illustrated in FIG. 8B, the unwound yarn 25 can be inserted into the upstream guide recess 37 and cut by the upstream cutting section 36. A distal end portion of the unwound yarn 25 that has been cut is suctioned into the suction port 51 and removed.

However, there may be a case where it is not possible to introduce the unwound yarn 25 into the upstream guide recess 37 due to a cause such as obstruction by the yarn supplying bobbin 7, and the yarn supplying bobbin 7 passes through the gate section 31 without the unwound yarn 25 being cut by the upstream cutting section 36. In this case, the unwound yarn 25 between the suction port 51 and the fallen yarn supplying bobbin 7 may be inserted into the downstream guide recess 47 as illustrated in FIG. 9, and cut by the downstream cutting section 46. As described above, in the present embodiment, since the opportunity to cut the unwound yarn 25 can be secured substantially twice, the unwound yarn 25 generated on the yarn supplying bobbin 7 can be shortened as a whole. As a result, it is possible to reduce entanglement and the like of the unwound yarn 25 in the yarn supplying bobbin 7 conveyed toward the downstream side from the bobbin aligning device 15, and to realize smooth conveyance of the yarn supplying bobbin 7.

As described above, in the present embodiment, the gate section 31 is configured to move in a direction orthogonal to the path surface 21a. Therefore, as compared with the configuration in which the rocking member on which a plurality of feed yarn bobbins are mounted rocks as in Japanese Unexamined Patent Publication No. 2012-184074, members such as the gate section 31 can be made compact, and the bobbin conveying device 12 can be easily downsized.

Furthermore, in the present embodiment, the gate section 31 conveys the yarn supplying bobbin 7 while periodically adjusting intensity of feeding momentum, rather than strictly separating and conveying the feed yarn bobbin by a predetermined amount as in Japanese Unexamined Patent Publication No. 2012-184074. In addition, as described above, the gate section 31 is configured compact. Therefore, it is possible to satisfactorily create a state where a part of lumped yarn supplying bobbins 7 alone is passed to the downstream side of the gate section 31 and the rest is retained at the upstream side of the gate section 31. As a result, the unwound yarn 25 can be easily cut by the upstream cutting section 36 with the gate section 31 as a boundary, and the entanglement of the unwound yarn 25 can be eliminated.

As described above, the upstream cutting device 13 of the present embodiment is provided in the middle of the movement path 10 on which the plurality of yarn supplying bobbins 7 wound with yarns move. The upstream cutting device 13 includes the gate section 31 and the upstream cutting section 36. The gate section 31 is provided so as to be movable in the vertical direction intersecting the moving direction of the yarn supplying bobbin 7 with respect to the path surface 21a of the movement path 10. This movement can limit passage of the yarn supplying bobbin 7 in the movement path 10. The upstream cutting section 36 cuts the unwound yarn 25 unwound and extended from the yarn supplying bobbin 7, with the gate section 31 as a boundary.

This causes the gate section 31 to move with respect to a yarn supplying bobbin group in which a plurality of yarn supplying bobbins 7 are lumped due to entanglement of the unwound yarns 25, which can promote a state of allowing passage of some of the plurality of yarn supplying bobbins 7 and inhibiting passage of the rest, in other words, a state where the unwound yarn 25 straddles the gate section 31. Then, the unwound yarn 25 can be easily cut by the upstream cutting section 36. This can eliminate entanglement between the unwound yarns 25, and facilitate subsequent handling of the yarn supplying bobbin 7.

Further, in the upstream cutting device 13 of the present embodiment, the upstream cutting section 36 moves integrally with the gate section 31.

This enables, while moving the gate section 31, the upstream cutting section 36 to easily cut the unwound yarn 25 that is in contact with the gate section 31 and receives an effect.

Further, in the upstream cutting device 13 of the present embodiment, the gate section 31 alternately repeats the movement to the limiting position to cause limitation on the passage of the yarn supplying bobbin 7 and the movement to the allowing position to cause no limitation on the passage of the yarn supplying bobbin 7.

This causes repetition of a state where the yarn supplying bobbin 7 can easily pass through the gate section 31 and a state where the yarn supplying bobbin 7 does not easily pass, which can reliably promote a state where the unwound yarn 25 straddles the gate section 31.

In addition, in the upstream cutting device 13 of the present embodiment, the gate section 31 is movable along a linear path intersecting the moving direction of the yarn supplying bobbin 7.

This makes it possible to change the limitation on passage of the yarn supplying bobbin 7 with a simple configuration.

Further, in the upstream cutting device 13 of the present embodiment, a step between the upper end portion of the gate section 31 and the path surface 21a is changed as the gate section 31 moves.

This makes it possible to change the ease of passage of the yarn supplying bobbin 7 with a simple configuration.

Further, in the upstream cutting device 13 of the present embodiment, the upstream cutting section 36 repeatedly performs the cutting operation. A timing of the cutting operation includes a timing when the gate section 31 is at a highest position in a movement range.

This allows the upstream cutting section 36 to perform the cutting operation in a state where slackening of the unwound yarn 25 is small, enabling reliable cutting of the unwound yarn 25.

In addition, the bobbin conveying device 12 of the present embodiment includes the upstream cutting device 13 and the conveyance path 21. The conveyance path 21 forms a part of the movement path 10 on which the yarn supplying bobbin 7 moves from the bobbin box 11a to the bobbin processing device 3. The gate section 31 of the upstream cutting device 13 is arranged downstream of the conveyance path 21 in the moving direction of the yarn supplying bobbin 7 on the conveyance path 21.

This enables conveyance of the yarn supplying bobbin 7 while effectively eliminating entanglement of the unwound yarn 25 in the bobbin conveying device 12.

Further, the bobbin conveying device 12 of the present embodiment includes the downstream cutting section 46 that cuts the unwound yarn 25 unwound and extended from the yarn supplying bobbin 7. The downstream cutting section 46 is arranged downstream of the gate section 31 in the movement path 10.

This provides a plurality of opportunities for cutting the unwound yarn 25, enabling reliable elimination of entanglement of the unwound yarn 25.

Further, in the bobbin conveying device 12 of the present embodiment, the suction port 51 is formed downstream of the gate section 31 and upstream of the downstream cutting section 46, in the movement path 10. The blower 60 that supplies a negative pressure is connected to the suction port 51.

This allows the unwound yarn 25 to be held by the suction port 51, for cutting by the upstream cutting section 36 or the downstream cutting section 46.

Further, in the bobbin conveying device 12 of the present embodiment, a negative pressure is supplied to the suction port 51 when the gate section 31 ascends and descends.

By performing the suction at the suction port 51 when the gate section 31 is moved, which is when the yarn supplying bobbin 7 and the unwound yarn 25 are easily moved by being pushed, the unwound yarn 25 can be efficiently caught by the suction port 51.

Further, in the bobbin conveying device 12 of the present embodiment, the gate section 31 is formed with the upstream guide recess 37 capable of guiding the unwound yarn 25. The upstream cutting section 36 is provided in the upstream guide recess 37 so as to cut the unwound yarn 25 that has entered the upstream guide recess 37.

This enables cutting by the upstream cutting section 36 while stabilizing a position of the unwound yarn 25 by the upstream guide recess 37.

Further, in the bobbin conveying device 12 of the present embodiment, a height of the gate section 31 is changed with the movement thereof. In a state where the gate section 31 is located at a highest position in a movement range, an end portion of the upstream guide recess 37 on a side opposite to the opened side is higher than the path surface 21a.

This enables cutting by the upstream cutting section 36 while maintaining a stretched state of the unwound yarn 25 that has entered the upstream guide recess 37. Therefore, stability and reliability of cutting can be improved.

Further, the bobbin conveying device 12 of the present embodiment includes the discharge guide 41 that guides the movement of the yarn supplying bobbin 7, on the downstream side of the gate section 31. The discharge guide 41 is formed with the downstream guide recess 47 capable of guiding the unwound yarn 25. The unwound yarn 25 that has entered the downstream guide recess 47 is cut by the downstream cutting section 46 arranged downstream of the gate section 31 in the movement path 10.

This enables cutting by the downstream cutting section 46 while stabilizing a position of the unwound yarn 25 by the downstream guide recess 47.

Further, in the bobbin conveying device 12 of the present embodiment, the downstream cutting section 46 is provided in the downstream guide recess 47.

This can achieve a compact configuration of the discharge guide 41.

Further, in the bobbin conveying device 12 of the present embodiment, when viewed as illustrated in FIG. 2 with, as a reference, a direction orthogonal to the moving direction of the yarn supplying bobbin 7 on the conveyance path 21 and the horizontal line, an extending direction of the upstream guide recess 37 formed in the gate section 31 is different from an extending direction of the downstream guide recess 47 formed in the discharge guide 41.

This makes it possible to increase a probability that the unwound yarn 25 is to enter any of the recesses to be cut.

Further, in the bobbin conveying device 12 of the present embodiment, the upstream guide recess 37 formed in the gate section 31 is open perpendicularly upwards, when viewed as illustrated in FIG. 2 with, as a reference, a direction orthogonal to the moving direction of the yarn supplying bobbin 7 on the conveyance path 21 and the horizontal line. The downstream guide recess 47 formed in the discharge guide 41 opens slantingly downward when viewed in a direction similar to that described above.

This makes it easier for the unwound yarn 25 to enter each of the upstream guide recess 37 and the downstream guide recess 47. As a result, the cutting can be reliably carried out.

Further, the bobbin supplying device 2 of the present embodiment includes the bobbin conveying device 12 and the bobbin aligning device 15. The bobbin aligning device 15 is arranged downstream of the bobbin conveying device 12.

This allows the yarn supplying bobbin 7 to be smoothly supplied, while eliminating a state where a plurality of yarn supplying bobbins 7 are gathered and lumped due to entanglement of the unwound yarn 25, or a state where the unwound yarn 25 extends long from the yarn supplying bobbin 7.

Further, in the bobbin supplying device 2 of the present embodiment, the bobbin aligning device 15 is a vibrating feeder.

This enables smooth conveyance of the yarn supplying bobbin 7 in the vibrating feeder.

Further, the bobbin supplying device 2 of the present embodiment includes the control device 16. The control device 16 moves the gate section 31 when the conveyance path 21 is driven to convey the yarn supplying bobbin 7 in the bobbin conveying device 12, and the bobbin aligning device 15 is driven to align the yarn supplying bobbins 7.

This allows the gate section 31 to be operated while the bobbin conveying device 12 and the bobbin aligning device 15 are substantially conveying the yarn supplying bobbin 7.

A preferred embodiment of the present invention has been described above, but the above-described configuration may be modified as below.

In the above embodiment, the upstream cutting device 13 is arranged so as to be adjacent to the downstream cutting device 14. However, the upstream cutting device 13 may be arranged to be separated to some extent from the downstream cutting device 14 in a conveying direction. In this case, between the upstream cutting device 13 and the downstream cutting device 14, a bobbin conveyance mechanism (for example, a vibration conveyor) having an appropriate configuration may be provided as needed.

In the embodiment described above, the upstream cutting section 36 in the upstream cutting device 13 is configured to ascend and descend integrally with the gate section 31, but the upstream cutting section 36 does not necessarily ascend and descend integrally with the gate section 31. For example, the upstream cutting section 36 may ascend and descend at a timing not synchronized with the gate section 31, or may be fixedly provided.

In the above embodiment, the upstream cutting section 36 in the upstream cutting device 13 includes a plurality of cutters 38. Instead of the plurality of cutters 38, one cutter extending along the gate section 31 may be provided, or one cutter reciprocating along the gate section 31 may be provided. The similarly applies to the downstream cutting section 46 of the downstream cutting device 14.

The gate section 31 may be arranged in a position inclined with respect to the vertical direction. In this case, the upstream guide recess 37 is to be open slantingly upward with the downstream side facing upward, when viewed as illustrated in FIG. 2 with, as a reference, a direction orthogonal to the moving direction of the yarn supplying bobbin 7 on the conveyance path 21 and the horizontal line.

The downstream guide recess 47 in the discharge guide 41 may be formed so as to open horizontally rather than slantingly downward with the downstream side facing downward, when viewed with, as a reference, a direction orthogonal to the moving direction of the yarn supplying bobbin 7 on the conveyance path 21 and the horizontal line.

The gate section 31 may reciprocate, for example, slantingly rather than vertically, as already mentioned. The moving direction of the gate section 31 may be inclined rather than being perpendicular to the path surface 21a of the conveyance path 21. That is, it suffices to linearly move in a direction including the vertical direction.

Also at a lower end of a lifting stroke of the gate section 31, a small step may be formed between the gate section 31 and the path surface 21a. In other words, even if passage of the yarn supplying bobbin 7 is limited at the allowing position, it is merely required to weaken the limitation as compared with the limiting position.

The ascending and descending operation of the gate section 31 and the cutting operation of the cutters 38 and 48 may be realized by an appropriate actuator such as a motor or a solenoid, without limiting to the cylinder.

The cutters 38 and 48 may cut the unwound yarn 25 with, for example, a rotating circular blade, instead of the scissors-shaped blade. The upstream cutting section 36 and the downstream cutting section 46 may cut the unwound yarn 25 by, for example, clamping and tearing without using a blade.

The bobbin aligning device 15 is not limited to the vibrating feeder. For example, it is possible to use a bobbin aligning device configured to individualize the bobbins while conveying the yarn supplying bobbins 7 one by one vertically by a lifting conveyor.

The movement path 10 is not limited to the one for conveyance in a horizontal direction, and may be inclined with respect to the horizontal direction. Even in this case, it suffices that the gate section 31 is provided so as to limit the passage of the yarn supplying bobbin 7 by advancing and retreating of the gate section 31. That is, the gate section 31 is merely required to intersect the movement path 10 perpendicularly or slantingly.

Obviously, many modifications and variations of the present invention are possible in consideration of the above teachings. Therefore, it is to be understood that the present invention may be implemented otherwise than as described herein, within the scope of the appended claims.

A state where unwound yarns extending from a plurality of bobbins are entangled can reliably eliminated according to the present invention. An upstream cutting device (13) may be provided in a movement path (10) on which a plurality of yarn supplying bobbins (7) wound with yarns move. The upstream cutting device (13) may include a gate section (31) and an upstream cutting section (36). The gate section (31) may be provided so as to be movable in a direction intersecting a moving direction of the yarn supplying bobbin (7) with respect to a path surface (21a) of the movement path (10). This movement can limit passage of the yarn supplying bobbin (7) on the movement path (10). The upstream cutting section (36) cuts the unwound yarn (25) unwound and extended from the yarn supplying bobbin (7). The yarn being cut straddles the gate section (31).

## Claims

1. A cutting device (13) configured for being provided on a bobbin movement path (10) on which a plurality of bobbins (7) wound with yarns move, the cutting device (13) **characterized by** comprising:
a limiting section (31) provided to be movable in a direction intersecting a moving direction of the bobbins (7) with respect to a path surface (21a) of the bobbin movement path (10), the limiting section (31) being configured to move to a first position to cause a limitation of the passage of the bobbins (7) by moving upward from the path surface (21a) of the bobbin movement path (10), and a second position that is lower than the first position; and
a first cutting section (36) configured to cut a yarn straddling the limiting section (31).

2. The cutting device (13) according to claim 1, **characterized in that**
the first cutting section (36) is provided in the limiting section (31) and moves integrally with the limiting section (31).

3. The cutting device (13) according to claim 1 or 2, **characterized in that**
the limiting section (31) is configured to alternately repeat movement to the first position to cause limitation on passage of the bobbins (7) and movement to the second position to weaken limitation or cause no limitation on passage of the bobbins (7).

4. The cutting device (13) according to any one of claims 1 to 3, **characterized in that**
the limiting section (31) is configured to move in a direction orthogonal to a plane including a moving direction of the bobbins (7).

5. The cutting device (13) according to any one of claims 1 to 4, **characterized in that**
the cutting device is configured to change a height difference between an upper end portion of the limiting section (31) and the path surface (21a) by movement of the limiting section (31).

6. The cutting device (13) according to claim 5, **characterized in that**
the first cutting section (36) is configured to repeatedly perform a cutting operation, and
the first cutting section (36) is configured to perform a cutting operation at least when the limiting section (31) is located at the first position in repeated cutting operations.

7. A bobbin conveying device (12) having a bobbin movement path (10) which is provided for allowing that a plurality of bobbins (7) wound with yarns move thereon , **characterized by** comprising:
the cutting device (13) according to any one of claims 1 to 6, which is provided on the bobbin movement path (10);
wherein the bobbin conveying device preferably further comprises:
a conveyance path (21) that forms at least a part of the bobbin movement path (10), wherein
the limiting section (31) of the cutting device (13) is arranged downstream of the conveyance path (21) in a moving direction of the bobbins (7) on the conveyance path (21).

8. The bobbin conveying device (12) according to claim 7, **characterized by** further comprising:
a second cutting section (46) configured to cut a yarn, wherein
the second cutting section (46) is arranged downstream of the limiting section (31) in the bobbin movement path (10).

9. The bobbin conveying device (12) according to claim 8, **characterized in that**
a suction port (51) is formed on the bobbin movement path (10) on a downstream side of the limiting section (31) and an upstream side of the second cutting section (46), and
a suction source (60) configured to cause suctioning is connected to the suction port (51).

10. The bobbin conveying device (12) according to claim 9, **characterized in that**
a control device (16) is configured to drive the suction source (60) while the limiting section (31) is moving upward.

11. The bobbin conveying device (12) according to any one of claims 7 to 10, **characterized in that**
a first guide recess (37) configured to guide a yarn is formed in the limiting section (31), and
the first cutting section (36) is configured to cut a yarn that has entered the first guide recess (37).

12. The bobbin conveying device (12) according to claim 11, **characterized in that**
an end portion of the first guide recess (37) on a side opposite to an opened side is higher than the path surface (21a) in a state where the limiting section (31) is located at the first position.

13. The bobbin conveying device (12) according to claim 11 or 12, **characterized by** further comprising:
a guiding member (41) having a second guide recess (47) configured to guide a yarn, the guiding member (41) being configured to guide movement of the bobbins (7) on a downstream side of the limiting section (31); and
a second cutting section (46) arranged on the bobbin movement path (10) on a downstream side of the limiting section (31), the second cutting section (46) being configured to cut a yarn that has entered the second guide recess (47).

14. The bobbin conveying device (12) according to claim 13, **characterized in that**
the second cutting section (46) is provided in the second guide recess (47).

15. The bobbin conveying device (12) according to claim 13 or 14, **characterized in that**
in a viewpoint from a direction orthogonal to a moving direction of the bobbins (7) on the conveyance path (21) in a horizontal direction, an extending direction of the first guide recess (37) formed in the limiting section (31) is different from an extending direction of the second guide recess (47) formed in the guiding member (41).

16. The bobbin conveying device (12) according to claim 15, **characterized in that**
the first guide recess (37) formed in the limiting section (31) opens perpendicularly upward or slantingly upward with a downstream side facing upward, in a viewpoint from a direction orthogonal to a moving direction of the bobbins (7) on the conveyance path (21) in a horizontal direction, and
the second guide recess (47) formed in the guiding member (41) opens toward a downstream direction in a horizontal direction or slantingly downward with a downstream side facing downward, in a viewpoint from a direction orthogonal to a moving direction of the bobbins (7) on the conveyance path (21) in a horizontal direction.

17. A bobbin supplying device (2) **characterized by** comprising:
the bobbin conveying device (12) according to any one of claims 7 to 16; and
a bobbin aligning device (15) arranged downstream of the bobbin conveying device (12) in the bobbin movement path (10).

18. The bobbin supplying device (2) according to claim 17, **characterized in that**
the bobbin aligning device (15) is a vibrating feeder; or/and **characterized by** further comprising:
a control section (16) configured to move the limiting section (31) when both the conveyance path (21) and the bobbin aligning device (15) are driven.

19. Method of cutting yarn (25) unwound from a respective bobbin (7) of a plurality of bobbins (7) being conveyed along a movement path (10), comprising to intermittingly limit and release the passage of the bobbins (7) along the movement path (10) using a limiting section (31) being moveable in a direction intersecting a moving direction of the bobbins (7), **characterized by** cutting a yarn which straddles the limiting section (31).

## Patentansprüche

1. Schneidvorrichtung (13), die zum Bereitstellen an einem Spulenbewegungsweg (10) konfiguriert ist, auf dem sich eine Mehrzahl von Spulen (7) bewegen, die mit Garn bewickelt sind, wobei die Schneidvorrichtung (13) **dadurch gekennzeichnet ist, dass** sie aufweist:
einen Begrenzungsabschnitt (31), der in einer Richtung beweglich bereitgestellt ist, die eine Bewegungsrichtung der Spulen (7) in Bezug auf eine Wegoberfläche (21a) des Spulenbewegungswegs (10) schneidet, wobei der Begrenzungsabschnitt (31) konfiguriert ist, zur Bewegung zu einer ersten Position, um durch Aufwärtsbewegung von der Wegoberfläche (21a) des Spulenbewegungswegs (10) eine Begrenzung des Durchtritts der Spulen (7) zu veranlassen, und einer zweiten Position, die niedriger ist als die erste Position; und
einen ersten Schneidabschnitt (36), der konfiguriert ist, um ein den Begrenzungsabschnitt (31) überspannendes Garn zu schneiden.

2. Die Schneidvorrichtung (13) nach Anspruch 1, **dadurch gekennzeichnet, dass** der erste Schneidabschnitt (36) in dem Begrenzungsabschnitt (31) vorgesehen ist und sich integriert mit dem Begrenzungsabschnitt (31) bewegt.

3. Die Schneidvorrichtung (13) nach Anspruch 1 oder 2, **dadurch gekennzeichnet, dass** der Begrenzungsabschnitt (31) konfiguriert ist, um eine Bewegung zu dem ersten Abschnitt abwechselnd zu wiederholen, um eine Durchtrittsbegrenzung der Spulen (7) und eine Bewegung zu der zweiten Position zu veranlassen, um die Begrenzung zu schwächen oder keine Durchtrittsbegrenzung der Spulen (7) zu veranlassen.

4. Die Schneidvorrichtung (13) nach einem der Ansprüche 1 bis 3, **dadurch gekennzeichnet, dass** der Begrenzungsabschnitt (31) konfiguriert ist, um sich in einer Richtung orthogonal zu einer Ebene zu bewegen, welche eine Bewegungsrichtung der Spulen (7) enthält.

5. Die Schneidvorrichtung (13) nach einem der Ansprüche 1 bis 4, **dadurch gekennzeichnet, dass** die Schneidvorrichtung konfiguriert ist, um eine Höhendifferenz zwischen einem oberen Endabschnitt des Begrenzungsabschnitts (31) und der Wegoberfläche (21a) durch Bewegung des Begrenzungsabschnitts (31) zu ändern.

6. Die Schneidvorrichtung (13) nach Anspruch 5, **dadurch gekennzeichnet, dass** der erste Schneidabschnitt (36) konfiguriert ist, um eine Schneidoperation wiederholt durchzuführen, und
der erste Schneidabschnitt (36) konfiguriert ist, um in wiederholten Schneidoperationen eine Schneidoperation zumindest dann durchzuführen, wenn der Begrenzungsabschnitt (31) an der ersten Position angeordnet ist.

7. Spulenfördervorrichtung (12) mit einem Spulenbewegungsweg (10), der vorgesehen ist, um zu erlauben, dass sich darauf eine Mehrzahl von Spulen (7) bewegen, die mit Garn bewickelt sind, **dadurch gekennzeichnet, dass** sie aufweist:
die Schneidvorrichtung (13) nach einem der Ansprüche 1 bis 6, die auf dem Spulenbewegungsweg (10) vorgesehen ist;
wobei die Spulenfördervorrichtung bevorzugt ferner aufweist:
einen Förderweg (21), der zumindest einen Teil des Spulenbewegungswegs (10) bildet, wobei
der Begrenzungsabschnitt (31) der Schneidvorrichtung (13) in Bewegungsrichtung der Spulen (7) auf dem Förderweg stromab des Förderwegs (21) angeordnet ist.

8. Die Spulenfördervorrichtung (12) nach Anspruch 7, **dadurch gekennzeichnet, dass** sie ferner aufweist:
einen zweiten Schneidabschnitt (46), der konfiguriert ist, um ein Garn zu schneiden, wobei
der zweite Schneidabschnitt (46) in dem Spulenbewegungsweg (10) stromab des Begrenzungsabschnitts (31) angeordnet ist.

9. Die Spulenfördervorrichtung (12) nach Anspruch 8, **dadurch gekennzeichnet, dass**
eine Saugöffnung (51) an dem Spulenbewegungsweg (10) an einer stromabwärtigen Seite des Begrenzungsabschnitts (31) und einer stromaufwärtigen Seite des zweiten Schneidabschnitts (46) ausgebildet ist, und
eine Saugquelle (60), die konfiguriert ist, um Saugen zu veranlassen, mit der Saugöffnung (51) verbunden ist.

10. Die Spulenfördervorrichtung (12) nach Anspruch 9, **dadurch gekennzeichnet, dass** eine Steuervorrichtung (16) konfiguriert ist, um die Saugquelle (60) anzutreiben, während sich der Begrenzungsabschnitt (31) aufwärts bewegt.

11. Die Spulenfördervorrichtung (12) nach einem der Ansprüche 7 bis 10, **dadurch gekennzeichnet, dass**
eine erste Führungsvertiefung (37), die konfiguriert ist, um ein Garn zu führen, in dem Begrenzungsabschnitt (31) ausgebildet ist, und
der erste Schneidabschnitt (36) konfiguriert ist, um ein Garn zu schneiden, das in die erste Führungsvertiefung (37) eingetreten ist.

12. Die Spulenfördervorrichtung (12) nach Anspruch 11, **dadurch gekennzeichnet, dass** in einem Zustand, in dem der Begrenzungsabschnitt (31) an der ersten Position angeordnet ist, ein Endabschnitt der ersten Führungsvertiefung (37) an einer einer offenen Seite entgegengesetzten Seite höher ist als die Wegoberfläche (21a).

13. Die Spulenfördervorrichtung (12) nach Anspruch 11 oder 12, **dadurch gekennzeichnet, dass** sie ferner aufweist:
ein Führungselement (41), das eine zweite Führungsvertiefung (47) aufweist, die konfiguriert ist, um ein Garn zu führen, wobei das Führungselement (41) konfiguriert ist, um eine Bewegung der Spulen (7) an einer stromabwärtigen Seite des Begrenzungsabschnitts (31) zu führen; und
einen zweiten Schneidabschnitt (46), der an dem Spulenbewegungsweg (10) an einer stromabwärtigen Seite des Begrenzungsabschnitts (31) angeordnet ist, wobei der zweite Schneidabschnitt (46) konfiguriert ist, um ein Garn zu schneiden, das in die zweite Führungsvertiefung (47) eingetreten ist.

14. Die Spulenfördervorrichtung (12) nach Anspruch 13, **dadurch gekennzeichnet, dass**
der zweite Schneidabschnitt (46) in der zweiten Führungsvertiefung (47) vorgesehen ist.

15. Die Spulenfördervorrichtung (12) nach Anspruch 13 oder 14, **dadurch gekennzeichnet, dass**
in einem Blickpunkt von einer Richtung orthogonal zu einer Bewegungsrichtung der Spulen (7) an dem Förderweg (21) in einer horizontalen Richtung, eine Erstreckungsrichtung der in dem ersten Begrenzungsabschnitt (31) ausgebildeten ersten Führungsvertiefung (37) von einer Erstreckungsrichtung der in dem Führungselement (41) ausgebildeten zweiten Führungsvertiefung (47) verschieden ist.

16. Die Spulenfördervorrichtung (12) nach Anspruch 15, **dadurch gekennzeichnet, dass**
sich, bei Betrachtung aus einer Richtung orthogonal zu einer Bewegungsrichtung der Spulen (7) auf dem Förderweg (21) in einer horizontalen Richtung, die in dem Begrenzungsabschnitt (31) ausgebildete erste Führungsvertiefung (37) senkrecht aufwärts oder schräg aufwärts, mit einer nach oben weisenden stromabwärtigen Seite, öffnet, und
sich, bei Betrachtung aus einer Richtung orthogonal zu einer Bewegungsrichtung der Spulen (7) auf dem Förderweg (21) in einer horizontalen Richtung, die in dem Führungselement (41) ausgebildete zweite Führungsvertiefung (47) zu einer stromabwärtigen Richtung in einer horizontalen Richtung oder schräg abwärts mit einer nach unten weisenden stromabwärtigen Seite öffnet.

17. Spulenzuführvorrichtung (2), **dadurch gekennzeichnet, dass** sie aufweist:
die Spulenfördervorrichtung (12) nach einem der Ansprüche 7 bis 16; und
eine Spulenausrichtungsvorrichtung (15), die in dem Spulenbewegungsweg (10) stromab der Spulenfördervorrichtung (12) angeordnet ist.

18. Die Spulenzuführvorrichtung (2) nach Anspruch 17, **dadurch gekennzeichnet, dass**
die Spulenausrichtungsvorrichtung (15) ein Vibrationsförderer ist und/oder **dadurch gekennzeichnet, dass** sie ferner aufweist:
einen Steuerabschnitt (16), der konfiguriert ist, um den Begrenzungsabschnitt (31) zu bewegen, wenn sowohl der Förderweg (21) als auch die Spulenausrichtungsvorrichtung (15) angetrieben werden.

19. Verfahren zum Schneiden von Garn (25), das von einer jeweiligen Spule (7) einer Mehrzahl von Spulen (7) abgewickelt wird, die entlang einem Bewegungsweg (10) gefördert werden, wobei es aufweist, den Durchtritt der Spulen (7) entlang dem Bewegungsweg (10) mittels eines Begrenzungsabschnitts (31), der in einer eine Bewegungsrichtung der Spulen (7) schneidenden Richtung bewegbar ist, intermittierend zu begrenzen und freizugeben, **gekennzeichnet durch**: Schneiden eines Garns, das den Begrenzungsabschnitt (31) überspannt.

## Revendications

1. Dispositif de coupe (13) configuré pour être prévu sur un chemin de déplacement (10) de bobines sur lequel une pluralité de bobines (7) enroulées avec des fils se déplacent, le dispositif de coupe (13) étant **caractérisé en ce qu'**il comprend :
une section de limitation (31) prévue pour être mobile dans une direction croisant une direction de déplacement des bobines (7) par rapport à une surface de chemin (21a) du chemin de déplacement (10) de bobines, la section de limitation (31) étant configurée pour se déplacer vers une première position pour provoquer une limitation du passage des bobines (7) en se déplaçant vers le haut à partir de la surface de chemin (21a) du chemin de déplacement (10) de bobines, et une seconde position qui est plus basse que la première position ; et
une première section de coupe (36) configurée pour couper un fil passant par-dessus la section de limitation (31).

2. Dispositif de coupe (13) selon la revendication 1, **caractérisé en ce que** la première section de coupe (36) est prévue dans la section de limitation (31) et se déplace d'un seul bloc avec la section de limitation (31).

3. Dispositif de coupe (13) selon la revendication 1 ou 2, **caractérisé en ce que** la section de limitation (31) est configurée pour répéter alternativement un déplacement vers la première position pour provoquer une limitation du passage des bobines (7) et un déplacement vers la seconde position pour diminuer une limitation ou ne provoquer aucune limitation du passage des bobines (7).

4. Dispositif de coupe (13) selon l'une quelconque des revendications 1 à 3, **caractérisé en ce que**
la section de limitation (31) est configurée pour se déplacer dans une direction orthogonale à un plan comportant une direction de déplacement des bobines (7).

5. Dispositif de coupe (13) selon l'une quelconque des revendications 1 à 4, **caractérisé en ce que**
le dispositif de coupe est configuré pour changer une différence de hauteur entre une portion d'extrémité supérieure de la section de limitation (31) et la surface de chemin (21a) par un déplacement de la section de limitation (31).

6. Dispositif de coupe (13) selon la revendication 5, **caractérisé en ce que** la première section de coupe (36) est configurée pour réaliser de manière répétée une opération de coupe, et
la première section de coupe (36) est configurée pour réaliser une opération de coupe au moins lorsque la section de limitation (31) est située à la première position dans des opérations de coupe répétées.

7. Dispositif de transport de bobines (12) ayant un chemin de déplacement (10) de bobines qui est prévu pour permettre à une pluralité de bobines (7) enroulées avec des fils de se déplacer sur celui-ci, **caractérisé en ce qu'**il comprend :
le dispositif de coupe (13) selon l'une quelconque des revendications 1 à 6, qui est prévu sur le chemin de déplacement (10) de bobines ;
dans lequel le dispositif de transport de bobines comprend de préférence en outre :
un chemin de transport (21) qui forme au moins une partie du chemin de déplacement (10) de bobines, dans lequel
la section de limitation (31) du dispositif de coupe (13) est agencée en aval du chemin de transport (21) dans une direction de déplacement des bobines (7) sur le chemin de transport (21).

8. Dispositif de transport de bobines (12) selon la revendication 7, **caractérisé en ce qu'**il comprend en outre :
une seconde section de coupe (46) configurée pour couper un fil, dans lequel la seconde section de coupe (46) est agencée en aval de la section de limitation (31) dans le chemin de déplacement (10) de bobines.

9. Dispositif de transport de bobines (12) selon la revendication 8, **caractérisé en ce que**
un orifice d'aspiration (51) est formé sur le chemin de déplacement (10) de bobines sur un côté aval de la section de limitation (31) et un côté amont de la seconde section de coupe (46), et
une source d'aspiration (60) configurée pour provoquer une aspiration est reliée à l'orifice d'aspiration (51).

10. Dispositif de transport de bobines (12) selon la revendication 9, **caractérisé en ce que**
un dispositif de commande (16) est configuré pour entraîner la source d'aspiration (60) tandis que la section de limitation (31) se déplace vers le haut.

11. Dispositif de transport de bobines (12) selon l'une quelconque des revendications 7 à 10, **caractérisé en ce que**
un premier creux guide (37) configuré pour guider un fil est formé dans la section de limitation (31), et
la première section de coupe (36) est configurée pour couper un fil qui est entré dans le premier creux guide (37).

12. Dispositif de transport de bobines (12) selon la revendication 11, **caractérisé en ce que**
une portion d'extrémité du premier creux guide (37) sur un côté opposé à un côté ouvert est plus haute que la surface de chemin (21a) dans un état où la section de limitation (31) est située à la première position.

13. Dispositif de transport de bobines (12) selon la revendication 11 ou 12, **caractérisé en ce qu'**il comprend en outre :
un élément de guidage (41) ayant un second creux guide (47) configuré pour guider un fil, l'élément de guidage (41) étant configuré pour guider un déplacement des bobines (7) sur un côté aval de la section de limitation (31) ; et
une seconde section de coupe (46) agencée sur le chemin de déplacement (10) de bobines sur un côté aval de la section de limitation (31), la seconde section de coupe (46) étant configurée pour couper un fil qui est entré dans le second creux guide (47).

14. Dispositif de transport de bobines (12) selon la revendication 13, **caractérisé en ce que**
la seconde section de coupe (46) est prévue dans le second creux guide (47).

15. Dispositif de transport de bobines (12) selon la revendication 13 ou 14, **caractérisé en ce que**
selon un point de vue à partir d'une direction orthogonale à une direction de déplacement des bobines (7) sur le chemin de transport (21) dans une direction horizontale, une direction d'extension du premier creux guide (37) formé dans la section de limitation (31) est différente d'une direction d'extension du second creux guide (47) formé dans l'élément de guidage (41).

16. Dispositif de transport de bobines (12) selon la revendication 15, **caractérisé en ce que**
le premier creux guide (37) formé dans la section de limitation (31) s'ouvre perpendiculairement vers le haut ou obliquement vers le haut avec un côté aval faisant face vers le haut, selon un point de vue à partir d'une direction orthogonale à une direction de déplacement des bobines (7) sur le chemin de transport (21) dans une direction horizontale, et
le second creux guide (47) formé dans l'élément de guidage (41) s'ouvre vers une direction aval dans une direction horizontale ou diagonalement vers le bas avec un côté aval faisant face vers le bas, selon un point de vue à partir d'une direction orthogonale à une direction de déplacement des bobines (7) sur le chemin de transport (21) dans une direction horizontale.

17. Dispositif de fourniture de bobines (2) **caractérisé en ce qu'**il comprend :
le dispositif de transport de bobines (12) selon l'une quelconque des revendications 7 à 16 ; et
un dispositif d'alignement de bobines (15) agencé en aval du dispositif de transport de bobines (12) dans le chemin de déplacement (10) de bobines.

18. Dispositif de fourniture de bobines (2) selon la revendication 17, **caractérisé en ce que**
le dispositif d'alignement de bobines (15) est un distributeur vibrant ;
et/ou **caractérisé en ce qu'**il comprend en outre :
une section de commande (16) configurée pour se déplacer dans la section de limitation (31) lorsqu'à la fois le chemin de transport (21) et le dispositif d'alignement de bobines (15) sont entraînés.

19. Procédé de coupe d'un fil (25) déroulé à partir d'une bobine (7) respective d'une pluralité de bobines (7) qui sont transportées le long d'un chemin de déplacement (10), y compris pour limiter et libérer de manière intermittente le passage des bobines (7) le long du chemin de déplacement (10) en utilisant une section de limitation (31) qui est déplaçable dans une direction croisant une direction de déplacement des bobines (7), **caractérisé par** la coupe d'un fil qui passe par-dessus la section de limitation (31).
